Europäisches Patentamt

European Patent Office

Office européen des brevets

(19)

(11) **EP 0 755 482 B1**

(12) **FASCICULE DE BREVET EUROPEEN**

(45) Date de publication et mention
de la délivrance du brevet:
**07.01.1999 Bulletin 1999/01**

(51) Int Cl.[6]: **F02D 41/14**, F02D 41/34,
G01M 15/00

(21) Numéro de dépôt: **95914343.9**

(22) Date de dépôt: **06.04.1995**

(86) Numéro de dépôt international:
**PCT/EP95/01260**

(87) Numéro de publication internationale:
**WO 95/27848 (19.10.1995 Gazette 1995/45)**

(54) **PROCEDE DE DETECTION DES IRREGULARITES DE COMBUSTION D'UN MOTEUR A COMBUSTION INTERNE**

VERFAHREN ZUM DETEKTIEREN VON VERBRENNUNGSUNREGELMÄSSIGKEITEN IN EINEM VERBRENNUNGSMOTOR

METHOD FOR SENSING FAULTY COMBUSTION IN AN INTERNAL COMBUSTION ENGINE

(84) Etats contractants désignés:
**DE ES FR GB IT**

(30) Priorité: **12.04.1994 FR 9404418**

(43) Date de publication de la demande:
**29.01.1997 Bulletin 1997/05**

(73) Titulaire: **SIEMENS AUTOMOTIVE S.A.**
**31036 Toulouse Cédex (FR)**

(72) Inventeur: **ROSSIGNOL, Alain**
**F-31300 Toulouse (FR)**

(74) Mandataire: **Epping, Wilhelm, Dr.-Ing. et al**
**Patentanwalt**
**Postfach 22 13 17**
**80503 München (DE)**

(56) Documents cités:
**WO-A-93/20427          FR-A- 2 689 934**
**GB-A- 2 249 839          GB-A- 2 269 017**

## Description

La présente invention est relative à un procédé de détection des irrégularités de combustion d'un moteur à combustion interne, et plus particulièrement à un tel procédé faisant appel à la mesure d'écart temporels séparant des positions angulaires prédéterminées d'une cible liée en rotation au moteur et qui ne dépend pas des tolérances géométriques de cette cible.

On connaît de la technique antérieure, et plus particulièrement de la demande de brevet français n° 2 689 934 déposée par la demanderesse, qui fait partie intégrante de la présente description, un procédé de détection des irrégularités cycliques d'un moteur selon lequel on calcule, pour chaque cylindre, un paramètre critique représentatif de la variation de vitesse angulaire instantanée. Ce paramètre est obtenu par une combinaison linéaire d'écarts temporels séparant des positions angulaires prédéterminées d'une cible liée en rotation au moteur, à l'intérieur d'une fenêtre d'échantillonnage centrée sur un instant prédéterminé de la phase de combustion du cylindre considéré. Ce paramètre critique est ensuite comparé à un seuil de défaut obtenu expérimentalement sur un moteur de référence et mémorisé dans une table cartographique pour en déduire une information représentative d'une anomalie de combustion. Cependant, ce procédé présente l'inconvénient de dépendre de la précision de la cible en fonction de laquelle sont mesurés les écarts temporels. En effet, le calcul du paramètre critique est effectué sur la base de mesures réalisées sur la cible du moteur considéré, et son résultat est comparé avec un seuil de défaut obtenu sur un moteur de référence. De ce fait, les différences de géométrie des cibles, liées par exemple aux tolérances d'usinage en grande série ou aux tolérances de montage des dites cibles sur les moteurs (excentration, voile,...), peuvent introduire des variations susceptibles de conduire à de fausses détections de défaut ou à l'absence de détection d'un défaut réel.

Le problème posé consiste donc à rendre un tel procédé le moins sensible possible aux variations pouvant exister entre les cibles des différents moteurs de la série et le moteur de référence sur lequel les seuils de défaut ont été déterminés.

On connaît également de la demande de brevet WO 93 / 07497 un procédé de correction électronique des tolérances d'une cible. Dans ce procédé on considère un domaine où le moteur est entraîné par le véhicule comme étant le plus susceptible d'offrir une régularité de fonctionnement maximale. Dans ces conditions, on mesure la durée de chaque dent de la cible, on corrige cette durée en fonction de l'accélération angulaire, et on en forme le rapport à la durée de la première dent prise comme référence. On en déduit, après filtrage, un coefficient de correction de la durée de chaque dent en fonction de la première. Ce coefficient est ensuite utilisé pour corriger les mesures de durée effectuées ultérieurement, par exemple lors du calcul de la vitesse de rotation ou de la régularité de fonctionnement du moteur. Ce procédé présente l'inconvénient de proposer une correction intrinsèque au système considéré, sans lien avec un moteur de référence ayant servi à établir les seuils de défaut. En outre, les coefficients de correction obtenus dépendent de la précision avec laquelle la première dent est réalisée et ne peuvent être utilisés que de manière relative. Il apparaît de plus qu'un tel procédé, appliqué à la correction d'une cible pouvant comprendre plusieurs dizaines de dents devient très vite extrêmement lourd et consommateur de ressources et difficile à mettre en oeuvre dans un calculateur de contrôle du moteur. Par ailleurs, il peut s'avérer inadapté aux moteurs possédant un nombre impair de cylindres.

On connait encore du document GB 2 249 839 un procédé de détection des irrégularités de combustion selon lequel, pour s'affranchir des frottements piston/cylindre, on modifie les valeurs des seuils de détection de défaut en fonction de valeurs mesurées des variations de vitesse entre trois cylindres consécutifs, relevées dans des conditions de « fuel cut-off ». Cependant, pour qu'un tel procédé soit fiable, il est nécessaire d'avoir exploré l'ensemble des régimes dans ces conditions pour que la table des seuils de défaut soit mise à jour, ce qui n'est en pratique pas possible, particulièrement pour les hauts régimes correspondant à des conditions de pleine charge ou les bas régimes comme le ralenti, où couper l'alimentation en carburant conduirait au calage du moteur.

La présente invention a donc pour but de proposer un procédé de détection des irrégularités de combustion simple à mettre en oeuvre, adapté quel que soit le nombre de cylindres du moteur considéré et peu sensible aux écarts et tolérances pouvant exister entre les cibles du moteur de référence et celles des différents moteurs de la série.

On atteint ces buts de l'invention, ainsi que d'autres qui apparaîtront dans la suite de la présente description, au moyen d'un procédé de détection des irrégularités de combustion d'un moteur à combustion interne, consistant à calculer, pour chaque cylindre, un paramètre critique à partir d'une combinaison linéaire d'écarts temporels séparant des positions angulaires prédéterminées d'une cible solidaire du vilebrequin et à comparer ce paramètre à un seuil de défaut obtenu expérimentalement sur un moteur de référence. Selon le procédé suivant l'invention, [a] on calcule la valeur courante du paramètre critique pour le cylindre considéré, [b] on vérifie si le moteur se trouve dans un domaine de fonctionnement exempt de combustions et dans au moins une plage de régime centrée autour d'un régime prédéterminé, et dans ce cas, [c] on calcule, pour le cylindre considéré, un coefficient de correction du paramètre critique par rapport au moteur de référence, indépendant du régime prédéterminé, à partir de la valeur courante calculée et d'une valeur de référence du paramètre critique obtenue dans des conditions sensiblement identiques sur le moteur de référence.

Suivant une caractéristique importante de la présente invention, on corrige les valeurs du paramètre critique au moyen du coefficient de correction avant de les comparer au seuil de défaut précité.

Suivant une autre caractéristique de l'invention, on répète cycliquement les étapes [a], [b] et [c] et on obtient le coefficient de correction par filtrage numérique des valeurs du coefficient obtenues lors des cycles précédents.

Avantageusement, la valeur du coefficient de correction obtenue à chaque cycle n'est prise en compte dans le calcul du coefficient de correction final que si son écart par rapport au coefficient obtenu lors du cycle précédent est inférieur à une valeur maximale prédéterminée.

De même, le coefficient de correction n'est utilisé pour la correction des valeurs du paramètre critique que si le nombre de cycles effectués est supérieur à une valeur prédéterminée.

Selon une autre caractéristique avantageuse de l'invention, on détermine le domaine de fonctionnement du moteur exempt de combustions de l'étape [b] par l'apparition d'une condition de coupure d'injection en décélération.

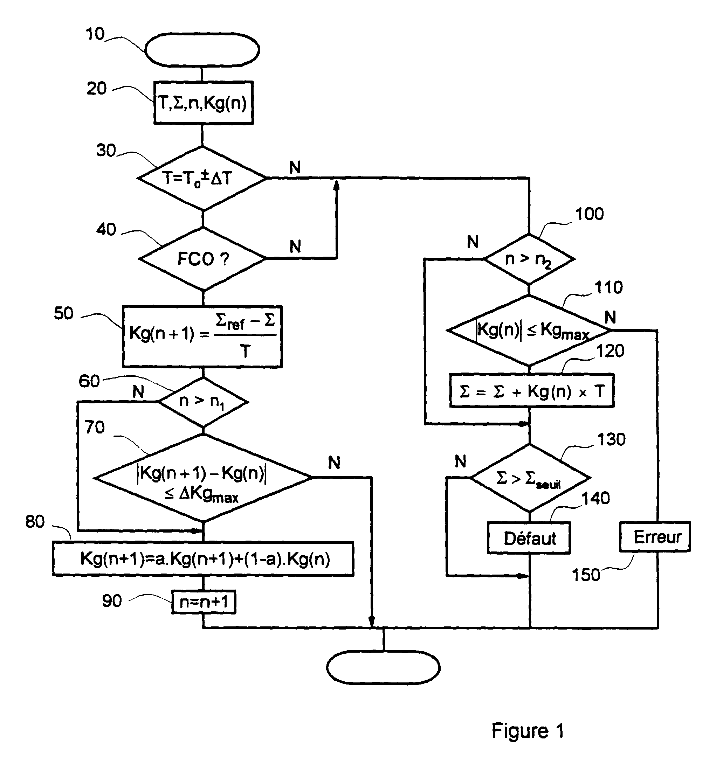

D'autres caractéristiques et avantages du procédé suivant l'invention apparaîtront à la lecture de la description qui va suivre et à l'examen du dessin annexé dans lequel la figure 1 représente un logigramme du procédé selon l'invention.

On supposera connue, dans la suite de cette description, la demande de brevet français 2 689 934, qui décrit le calcul d'un paramètre critique ($\Sigma$) représentatif d'une variation de la vitesse instantanée du moteur à l'instant de la combustion dans un cylindre donné. Pour calculer ce paramètre critique, on définit pour chaque cylindre une fenêtre d'échantillonnage centrée autour d'une position de référence et on effectue une combinaison linéaire des valeurs de mesures d'écarts temporels angulairement réparties de part et d'autre de la position de référence.

On se réfère maintenant à la figure 1 qui représente un exemple du procédé selon l'invention. A l'étape 10, on considère que, pour le cylindre considéré, le calcul de la valeur courante du paramètre critique $\Sigma$ a été exécuté, ainsi que les mesures couramment utilisées dans les systèmes connus de commande des moteurs à combustion interne, comme la mesure du régime, obtenue à partir de la période de rotation T. A l'étape 20, on extrait de la mémoire les valeurs obtenues pour le paramètre critique et la période de rotation, ainsi que le coefficient de correction $Kg(n)$ calculé lors d'un précédent cycle d'exécution du procédé et le nombre n de cycles effectués. Lors de la première exécution du procédé pour le cylindre considéré, ces deux derniers paramètres ont une valeur initiale nulle. On vérifie à l'étape 30 si le moteur se trouve dans une plage de régime centrée autour d'un régime prédéterminé, en comparant la période de rotation T à une plage de périodes de largeur $2\Delta T$ autour d'une période donnée $T_0$ correspondant par exemple à 2000 tours par minute plus ou moins 50 tours par minute. Si ce test est positif, on vérifie alors, à l'étape 40, si le moteur se trouve dans un domaine de fonctionnement exempt de combustions. On pourra choisir par exemple de vérifier la présence d'une condition de coupure d'injection en décélération (FCO). Une telle condition, bien connue dans le domaine de la commande des moteurs, se caractérise par l'arrêt de l'apport de carburant aux cylindres du moteur, entraînant de ce fait une absence de combustion dans les cylindres. Cet état est particulièrement avantageux car il permet d'être assuré qu'aucune variation liée à la combustion dans le cylindre considéré n'est prise en compte dans la valeur courante du paramètre critique $\Sigma$. On peut ainsi éviter certains inconvénients de la technique antérieure qui préconise que le moteur soit entraîné par le véhicule pour obtenir une régularité de fonctionnement maximale. En effet, même dans ce cas, des variations de la vitesse de rotation du moteur peuvent être causées par des combustions irrégulières. La combinaison des tests effectués aux étapes 30 et 40 permet ainsi d'avoir une valeur de $\Sigma$ sensiblement constante et qui dépend essentiellement de la géométrie de la cible par rapport à laquelle les mesures des écarts temporels sont réalisées.

Si le test effectué à l'étape 40 est positif, on procède alors, à l'étape 50, au calcul d'un coefficient de correction $Kg(n+1)$ du paramètre $\Sigma$ par rapport au moteur de référence. A cet effet, on tire de moyens de mémoire appropriés une valeur de référence $\Sigma_{ref}$ à laquelle on compare la valeur courante du paramètre $\Sigma$ obtenue précédemment. La valeur de référence $\Sigma_{ref}$ est une constante obtenue par exemple en calculant selon la même formule et pour le régime prédéterminé correspondant à la période $T_0$, le paramètre critique $\Sigma$ pour un moteur de référence. Ce même moteur sert, lors des essais de mise au point, à déterminer les seuils de défaut $\Sigma_{seuil}$ utilisés pour diagnostiquer une irrégularité de combustion. On peut par exemple entraîner ce moteur de référence au moyen d'un moteur électrique à un régime stabilisé de 2000 t/mn, calculer le paramètre $\Sigma$ un grand nombre de fois et en faire la moyenne qui sera mémorisée comme valeur de référence $\Sigma_{ref}$ pour tous les moteurs de la série. Le coefficient de correction $Kg(n+1)$ à l'étape 50 peut être simplement obtenu en effectuant la différence entre la valeur de référence $\Sigma_{ref}$ et la valeur courante du paramètre $\Sigma$, et en ramenant cette différence, homogène à un temps, à un coefficient sans dimension en la divisant par la valeur de la période de rotation du moteur. Dès lors, on dispose d'un coefficient de correction indépendant du régime prédéterminé auquel il a été établi, susceptible de servir à corriger les différences de géométrie, pour le cylindre observé, entre la cible du moteur de référence et celle du moteur considéré, comme on le verra par la suite en liaison avec les étapes 120 à 140 du procédé. Cependant, pour affiner la correction, on procède à un filtrage numérique du coefficient de correction. A l'étape 60, on vérifie que le nombre de cycles effectués n est supérieur à un premier seuil $n_1$. Dans ce cas, on vérifie à l'étape 70 que l'écart entre les coefficients de correction Kg(n+1) que l'on vient de calculer, et Kg(n) établi au cycle précédent est inférieur ou égal à une valeur maximale $\Delta Kg_{max}$ prédéterminée, afin d'éliminer des valeurs instantanées aberrantes de Kg(n+1). Cette vérification n'étant pas significative dans les premiers cycles d'exécution du procédé, elle est sautée si le test de l'étape 60 est négatif. Si le test de l'étape 70 révèle que la valeur du coefficient Kg(n+1) est cohérente, on procède à l'étape 80 au filtrage numérique au moyen de la formule

$$Kg(n+1) = a. Kg(n+1) + (1-a). Kg(n)$$

où a est un coefficient de filtrage compris entre 0 et 1 servant à pondérer l'influence du demier coefficient de correction obtenu par rapport aux coefficients précédents. A l'étape 90, on valide le cycle effectué en incrémentant la valeur du nombre de cycles n, et on mémorise la valeur du coefficient de correction obtenu à l'étape précédente sous la forme Kg(n) pour utilisation lors des cycles suivants. Si le test de l'étape 70 révèle une valeur aberrante du coefficient Kg(n+1), le filtrage numérique n'est pas effectué, le cycle n'est pas validé, et les valeurs du nombre de cycles et du coefficient de correction Kg(n) restent inchangées.

On va maintenant examiner le déroulement du procédé si l'un des deux tests effectués aux étapes 30 et 40 est négatif. Dans ce cas, les conditions de validité du calcul du coefficient de correction ne sont pas vérifiées, et on procède à la détection d'irrégularités de combustion. Pour ce faire, on corrige la valeur courante du paramètre critique $\Sigma$ calculée à l'étape 10 au moyen du coefficient de correction Kg(n) calculé lors d'un précédent cycle et extrait de la mémoire à l'étape 20. La validité de ce coefficient de correction n'est présumée que si le nombre de cycles n ayant conduit à un calcul valide du coefficient est supérieur à une valeur prédéterminée $n_2$, ce qui est vérifié par le test de l'étape 100. Si ce test est négatif, on saute à l'étape 130, et aucune correction du paramètre critique $\Sigma$ n'est opérée. Si le nombre de cycles n est suffisant, on vérifie la plausibilité du coefficient de correction Kg(n) en comparant sa valeur absolue à une valeur maximale $Kg_{max}$ prédéterminée, lors de l'étape 110. Si ce test est positif, on passe à l'étape 120 où s'opère la correction de la valeur du paramètre critique $\Sigma$ par la formule $\Sigma = \Sigma + Kg(n) \times T$, où T est la période de rotation du moteur lors du calcul de $\Sigma$.

On procède alors aux étapes 130 et éventuellement 140, où, de manière connue par exemple de la demande FR 2689 934, on effectue la détection des irrégularités de combustion en comparant le paramètre critique $\Sigma$ à un seuil de défaut $\Sigma_{seuil}$.

On constate ici que, quel que soit le régime (respectivement la période de rotation) du moteur lors du calcul du paramètre critique $\Sigma$, il suffit d'un seul coefficient de correction par cylindre, obtenu à un régime prédéterminé mais ne dépendant que de la différence de géométrie entre les cibles du moteur considéré et du moteur de référence, pour rendre le procédé de détection d'irrégularités de combustion insensible à cette différence.

Si le test de l'étape 110 n'est pas vérifié, le coefficient de correction Kg(n) est considéré comme invalide et n'est pas utilisé pour la correction du paramètre critique. Il peut être en outre, comme dans l'exemple décrit, considéré comme révélateur d'un incident matériel, par exemple une cible hors tolérances. Un signal d'erreur est alors généré et les étapes de détection d'irrégularités de combustion ne sont pas effectuées.

Le procédé décrit est appliqué successivement à chaque cylindre du moteur, permettant ainsi de définir un coefficient de correction et un nombre de cycles effectués associés respectivement à chaque cylindre. Cependant, lorsque le moteur comporte un nombre pair de cylindres, et que, comme dans un cycle à quatre temps, deux ou plus des cylindres sont associés à la même position angulaire de la cible, on peut avantageusement ne calculer qu'un seul coefficient de correction par groupe de cylindres associés.

Par ailleurs, le procédé selon l'invention a été décrit dans le cas où il se répète cycliquement, par exemple à chaque point mort haut du cylindre considéré. On pourrait, sans sortir du domaine de l'invention, n'exécuter le calcul du coefficient de correction qu'une ou un nombre limité de fois, ou encore ne l'autoriser que cycliquement en introduisant des tests appropriés avant l'étape 30, par exemple.

## Revendications

1. Procédé de détection des irrégularités de combustion d'un moteur à combustion inteme insensible aux tolérances géométriques d'une cible solidaire du vilebrequin, du type consistant à calculer, pour chaque cylindre, un paramètre critique ($\Sigma$) à partir d'une combinaison linéaire d'écarts temporels séparant des positions angulaires prédéterminées de la cible et à comparer ce paramètre à un seuil de défaut ($\Sigma_{seuil}$) obtenu expérimentalement sur un moteur de référence, procédé caractérisé en ce que :

   [a] on calcule la valeur courante du paramètre critique pour le cylindre considéré,
   [b] on vérifie si le moteur se trouve dans un domaine de fonctionnement exempt de combustions et dans une plage de régime centrée autour d'un régime prédéterminé, et dans ce cas,
   [c] on calcule, pour le cylindre considéré, un coefficient de correction (Kg(n); Kg(n+1)) du paramètre critique par rapport au moteur de référence, indépendant du régime prédéterminé, à partir de la valeur courante du paramètre critique ($\Sigma$) et d'une valeur de référence ($\Sigma_{ref}$) obtenue dans des conditions sensiblement identiques sur le moteur de référence.

2. Procédé selon la revendication 1, caractérisé en ce que l'on corrige les valeurs du paramètre critique ($\Sigma$) au moyen du coefficient de correction ($Kg(n)$) avant de les comparer au seuil de défaut ($\Sigma_{seuil}$) précité.

3. Procédé selon la revendication 2, caractérisé en ce que l'on répète cycliquement les étapes [a], [b] et [c] et en ce que le coefficient de correction ($Kg(n)$; $Kg(n+1)$) est obtenu par filtrage numérique des valeurs du coefficient obtenues lors des cycles précédents.

4. Procédé selon la revendication 3, caractérisé en ce que la valeur du coefficient de correction ($Kg(n+1)$) obtenue à chaque cycle n'est prise en compte dans le calcul du coefficient de correction final que si son écart par rapport au coefficient ($Kg(n)$) obtenu lors du cycle précédent est inférieur à une valeur maximale ($\Delta Kg_{max}$) prédéterminée.

5. Procédé selon la revendication 3, caractérisé en ce que le coefficient de correction ($Kg(n)$) n'est utilisé pour la correction des valeurs du paramètre critique ($\Sigma$) que si le nombre de cycles ($n$) effectués est supérieur à une valeur prédéterminée ($n_2$).

6. Procédé selon la revendication 3, caractérisé en ce que le coefficient de correction ($Kg(n)$) n'est utilisé pour la correction des valeurs du paramètre critique ($\Sigma$) que si sa valeur absolue est inférieure à une valeur maximale ($Kg_{max}$) prédéterminée

7. Procédé selon la revendication 1, caractérisé en ce que l'on détermine le domaine de fonctionnement du moteur exempt de combustions de l'étape [b] par la présence d'une condition de coupure d'injection en décélération (FCO).

## Patentansprüche

1. Verfahren zum Detektieren von Unregelmäßigkeiten in der Verbrennung eines Verbrennungsmotors, das gegenüber geometrischen Toleranzen eines mit der Kurbelwelle fest verbundenen Meßobjekts unempfindlich ist und bei dem für jeden Zylinder ein kritischer Parameter ($\Sigma$) ausgehend von einer linearen Kombination zeitlicher Abstände zwischen vorgegebenen Winkelpositionen des Meßobjekts berechnet wird und dieser Parameter mit einer Fehlerschwelle ($\Sigma_{seuil}$) verglichen wird, die experimen-

tell anhand eines Referenzmotors bestimmt wurde, dadurch gekennzeichnet, daß:

[a] der laufende Wert des kritischen Parameters für den betrachteten Zylinder berechnet wird,

[b] verifiziert wird, daß sich der Motor in einem verbrennungsfreien Betriebsbereich und in einem um eine vorgegebene Drehzahl zentrierten Drehzahlbereich befindet, und in diesem Fall

[c] für den betrachteten Zylinder ein Korrekturkoeffizient ($Kg(n)$; $Kg(n+1)$) für den kritischen Parameter bezüglich des Referenzmotors unabhängig von der vorgegebenen Drehzahl berechnet wird, und zwar ausgehend von dem laufenden Wert des kritischen Parameters ($\Sigma$) und einem Referenzwert ($\Sigma_{ref}$), der unter im wesentlichen identischen Bedingungen anhand des Referenzmotors erhalten wurde.

2. Verfahren nach Anspruch 1, dadurch gekennzeichnet, daß die Werte des kritischen Parameters ($\Sigma$) mit Hilfe des Korrekturkoeffizienten ($Kg(n)$) korrigiert werden, bevor sie mit der besagten Fehlerschwelle ($\Sigma_{seuil}$) verglichen werden.

3. Verfahren nach Anspruch 2, dadurch gekennzeichnet, daß die Schritte [a], [b] und [c] zyklisch wiederholt werden und daß der Korrekturkoeffizient ($Kg(n)$; $Kg(n+1)$) durch numerische Filterung der bei den vorhergehenden Zyklen erhaltenen Werte des Koeffizienten erhalten wird.

4. Verfahren nach Anspruch 3, dadurch gekennzeichnet, daß der bei jedem Zyklus erhaltene Wert des Korrekturkoeffizienten ($Kg(n+1)$) bei der Berechnung des finalen Korrekturkoeffizienten dann berücksichtigt wird, wenn sein Abstand zu dem bei dem vorhergehenden Zyklus erhaltenen Koeffizienten ($Kg(n)$) kleiner als ein vorgegebener maximaler Wert ($\Delta Kg_{max}$) ist.

5. Verfahren nach Anspruch 3, dadurch gekennzeichnet, daß der Korrekturkoeffizient ($Kg(n)$) für die Korrektur der Werte des kritischen Parameters ($\Sigma$) nur dann verwendet wird, wenn die Anzahl der durchgeführten Zyklen ($n$) größer als ein vorgegebener Wert ($n_2$) ist.

6. Verfahren nach Anspruch 3, dadurch gekennzeichnet, daß der Korrekturkoeffizient ($Kg(n)$) für die Korrektur der Werte des kritischen Parameters ($\Sigma$) nur dann verwendet wird, wenn S ein Absolutwert kleiner als ein vorgegebener maximaler Wert ($Kg_{max}$) ist.

7. Verfahren nach Anspruch 1, dadurch gekennzeichnet, daß der verbrennungsfreie Betriebsbereich des Verbrennungsmotors bei dem Schritt [b] durch das Vorhandensein eines Zustandes bestimmt wird, bei dem die Kraftstoffeinspritzung während einer Verzögerung (FCO) unterbrochen wird.

**Claims**

1. Method for detecting combustion irregularities in an internal combustion engine insensitive to the geometric tolerances on a target secured to the crankshaft, of the type which consists in calculating, for each cylinder, a critical parameter ($\Sigma$) from a linear combination of time differences separating predetermined angular positions of the target and in comparing this parameter with a defect threshold ($Z_{seuil}$) obtained experimentally on a reference engine, the method being characterized in that:

   [a] the current value of the critical parameter for the cylinder in question is calculated,
   [b] a check is carried out to determine whether the engine is in a combustion-free operating domain and in a range of speeds centered about a predetermined speed, and if it is,
   [c] a coefficient ($Kg(n)$; $Kg(n+1)$) for correcting the critical parameter with respect to the reference engine is calculated, for the cylinder in question, independently of the predetermined speed, from the current value of the critical parameter ($\Sigma$) and a reference value ($\Sigma_{ref}$) obtained under essentially identical conditions on the reference engine.

2. Method according to Claim 1, characterized in that the values of the critical parameter ($\Sigma$) are corrected using the correction coefficient ($Kg(n)$) before they are compared with the aforementioned defect threshold ($\Sigma_{seuil}$).

3. Method according to Claim 2, characterized in that steps [a], [b] and [c] are repeated cyclically and in that the correction coefficient ($Kg(n)$; $Kg(n+1)$) is obtained by a numerical filtering of the values of the coefficient that are obtained during the previous cycles.

4. Method according to Claim 3, characterized in that the value of the correction coefficient ($Kg(n+1)$) obtained in each cycle is taken into account in calculating the final correction coefficient only if it differs from the coefficient ($Kg(n)$) obtained in the previous cycle by less than a predetermined maximum value ($\Delta Kg_{max}$).

5. Method according to Claim 3, characterized in that the correction coefficient ($Kg(n)$) is used for correcting the values of the critical parameter ($\Sigma$) only if the number of cycles (n) performed exceeds a predetermined value ($n_2$).

6. Method according to Claim 3, characterized in that the correction coefficient ($Kg(n)$) is used for correcting the values of the critical parameter ($\Sigma$) only if its absolute value is below a predetermined maximum value ($Kg_{max}$)

7. Method according to Claim 1, characterized in that the combustion-free operating domain of the engine of step [b] is determined by the presence of a deceleration fuel cut-off condition (FCO).

10

20 — $T, \Sigma, n, Kg(n)$

30 — $T = T_0 \pm \Delta T$   N

40 — FCO ?   N

50 — $Kg(n+1) = \dfrac{\Sigma_{ref} - \Sigma}{T}$

60 — N   $n > n_1$

70 — $\left| Kg(n+1) - Kg(n) \right| \leq \Delta Kg_{max}$   N

80 — $Kg(n+1) = a.Kg(n+1) + (1-a).Kg(n)$

90 — $n = n+1$

100 — N   $n > n_2$

110 — $\left| Kg(n) \right| \leq Kg_{max}$   N

120 — $\Sigma = \Sigma + Kg(n) \times T$

130 — N   $\Sigma > \Sigma_{seuil}$

140 — Défaut

150

Erreur

Figure 1